# EUROPEAN PATENT SPECIFICATION

(11) **EP 3 656 223 B1**
(45) Date of publication and mention of the grant of the patent: **18.12.2024**
(21) Application number: 19201629.3
(22) Date of filing: 07.10.2019
(51) Int. Cl.: A23K 20/10, A23L 27/10

(54) **FOOD ADDITIVE FOR ANIMAL FEEDS COMPRISING FOOD ACIDS AND ESSENTIAL OILS**
ZUSATZSTOFF FÜR TIERFUTTER ENTHALTEND SÄUREN FÜR LEBENSMITTEL UND ESSENTIELLE ÖLE
ADDITIF ALIMENTAIRE POUR ALIMENTS POUR ANIMAUX COMPRENANT DES ACIDES ALIMENTAIRES ET DES HUILES ESSENTIELLES

(30) Priority: 23.11.2018 IT 201800010530
(43) Date of publication of application: 27.05.2020
(73) Proprietor: A.W.P. S.r.l., 41051 Castelnuovo Rangone (MO) (IT)
(72) Inventor: CRISTOFORI, Paolo, 42123 REGGIO EMILIA (IT)
(74) Representative: Corradini, Corrado

(56) References cited:
- WO-A2-2012/027140
- CN-A- 107 927 416
- CN-A- 108 719 595
- GB-A- 1 060 447
- US-A1- 2008 032 021
- US-A1- 2009 004 308

## Description

### TECHNICAL FIELD

The present invention relates to the formulation of a food composition for farm animals or pets, more particularly a food additive for farm animal or pet feeds and the relative feed.

### PRIOR ART

In the veterinary and/or zootechnical field it is known to use complements for the enrichment of feeds used to enrich and complete feeds for animals.

These additives, also called functional additives, consist of a preparation to be added to the feed before administration to the animal which normally allows the nutritional properties of the feed itself to be improved.

Examples of these additives, according to the preamble of claim 1, are known from CN 107927416 A, US 2008/032021 A1 and WO 2012/027140 A2. Needs felt in this sector are those of increasing the digestibility of feeds for the animal and, at the same time, allowing the enhancement of the flavours of the feeds that encourage the intake thereof by the animal.

Furthermore, a need felt in the sector is to reduce, or at least to avoid, the administration of antibiotics for the promotion of the growth of the animals and, therefore, to stimulate and improve naturally the response of the immune system of the animals, through the appropriate and calibrated feeding thereof.

An object of the present invention therefore is to meets such needs of the prior art with a simple, rational and relatively low-cost solution.

These objects are achieved by the features of the invention described in the independent claims. The dependent claims describe preferred and/or particularly advantageous aspects of the invention.

### DISCLOSURE OF THE INVENTION

The invention, in particular, provides a food additive for farm animal or pet feeds.

Within the scope of the present invention, by animal feed it is meant, by way of example, a feed for pigs, fish, poultry species, herbivorous species, such as cattle or sheep or horses or the like, at any stage of their growth.

The feed for animals of the present invention is, preferably, a dry feed in the form of pellets, cubes, granules or powders which has nutritional properties for the animal.

The food additive is preferably a liquid form composition.

It is not excluded, however, that the food additive may be a solid form (in the form of pellets, cubes, granules or powders) or fluid (such as a gel) composition.

The food additive comprises a composition (or mixture) comprising (or consisting of) a mixture of food acids and a mixture of essential oils.

Essential oil is meant herein to be an essential oil of vegetable origin, i.e. obtained for example by extraction from plants.

By virtue of this composition, the Applicant has observed that the additive added to the feed allows the taste of the feed itself to be enhanced and, comparatively with a feed not supplemented with such a food additive, the animal prefers and is encouraged to eat the supplemented feed.

Moreover, by virtue of the aforesaid composition, the additive added to the feed encourages the digestibility, comparatively with a feed not supplemented with such a food additive, of the feed itself by the animal.

Each food acid and each essential oil is allowed in the list of additives for animal feed and is non-toxic to the animal according to EC and US directives (GRAS, USA FDA).

The mixture of food acids consists of a measured amount of acetic acid, preferably derived from or consisting of vinegar, and a measured amount of citric acid, preferably derived from or consisting of fermentations using fungi (such as *Aspergillus niger*) or yeasts.

The mixture of food acids is present in a percentage by weight equal to 94.45% with respect to the total weight of the composition.

The mixture of food acids consists of:
- 89.45% acetic acid; and
- 5% citric acid;
wherein the percentages are percentages by weight with respect to the total weight of the composition.

According to an aspect of the invention, the mixture of essential oils comprises a measured amount of eucalyptol (or an essential oil deriving from the eucalyptus plant), a measured amount of essential oil of oregano (or an essential oil deriving from the oregano plant) and a measured of thymol (or an essential oil derived from the thymus plant).

Furthermore, the aforesaid mixture of essential oils comprises a measured amount of garlic essential oil (or an essential oil derived from the garlic plant). With this solution, the Applicant has found that the food additive also has a high antioxidant action and acts as an immuno-stimulator for the animal. According to an advantageous aspect of the invention, the mixture of essential oils is present in a percentage equal to 5.55% with respect to the total composition.

Preferably, the mixture of essential oils consists of:
- 3% eucalyptol;
- 2% oregano essential oil;
- 0.5% thymol;
- 0.05% garlic essential oil;
wherein the percentages are percentages by weight with respect to the total weight of the composition.

The Applicant has surprisingly found that the use of such relative percentages between the various components of the mixture of essential oils, for example together with the above-mentioned relative percentages between the various components of the mixture of food acids, for making the food additive causes a synergistic effect among all of the above components which improves the performance compared to the single components taken singularly (and with respect to the feed without additives), greatly improving the effects on the animal.

In particular, the Applicant after an intense research and development activity, as well as after a large amount of validation tests carried out on different animal species, has showed that the mixture of essential oils, preferably with the above composition and the above proportions, combined with the mixture of food acids, preferably with the above composition and the above proportions, represents a valid and effective substitute of the antibiotics promoting growth and substantially reinforces the immune system of the animals to which it is administered during feeding thereof.

A feed for farm animals or pets which comprises a nutritional compound composed of (or including or consisting of) a food which is then supplemented with a food additive as described above can be provided.

For example, the food is a dry food (in solid form) in the form of pellets, cubes, granules or powders that exhibits nutritional properties for the animal. Preferably, the additive is present in a percentage by weight comprised between 0.01% and 0.05% with respect to the total weight of the nutritional compound.

Therefore, the food is present in a percentage by weight comprised between 99.99% and 99.95% of the total weight of the nutritional compound.

The food may have the following composition shown in Table 1.

| **Table 1** | | |
|---|---|---|
| **Ingredient** | **Starter (1-18 days)** [kg] | **Grower (19-40 days)** |
| Corn | 549 | 570.7 |
| Rice bran | 80 | 120 |
| Cassava | 0 | 50 |
| Sbm 47 Thanakorn | 270 | 175 |
| Full fat soy | 61 | 50 |
| Limestone | 11 | 10 |
| MDCP 21 | 14.4 | 11.9 |
| Salt | 3.6 | 2 |
| Sodium bicarbonate | 2 | 2 |
| Choline chloride 60 | 1.0 | 0.6 |
| L Lysine | 2.0 | 2.0 |
| DL Methionine | 2.5 | 2.2 |
| L Threonine | 0.5 | 0.6 |
| Vitamins/minerals | 2 | 2 |
| Coccidiostat | 0.5 | 0.5 |
| Toxin binder | 0.5 | 0.5 |
| Total, kg | 1000 | 1000 |

Furthermore, the food may have the following minimum nutrients shown in Table 2.

| **Table 2** | | |
|---|---|---|
| **Nutrient minimums** | **Starter (1-18 days)** | **Grower (19-40 days)** |
| ME, kcal/kg | 2950 | 3000 |
| Protein, % (actual) | (20.2) | (16.2) |
| Digest lysine, % | 1.15 | 0.90 |
| Digest methionine, % | 0.4255 | 0,342 |
| Digest mc, % | 0,805 | 0,675 |
| Digest tryptophan, % | 0,184 | 0,153 |
| Digest threonine, % | 0,713 | 0,576 |
| Digest arginine, % | 1.2075 | 0,972 |
| Digest isoleucine, % | 0.7475 | 0,540 |
| Digest Valine, % | 0.8855 | 0,702 |
| Calcium, % | 0.78 | 0,680 |
| Available P | 0.42 | 0.36 |
| Sodium, % | 0.22 | 0.16 |
| Choline, ppm | 1850 | 1450 |

The nutritional composition is, for example, obtained by (mechanical) mixing of the food with the above food additive or with another known method which allows the additive to be finely dispersed in the food.

Furthermore, the Applicant has found that the use of a food additive as described above (in liquid form) for the preparation of an animal feed (in solid form) is very efficient for the purposes set out above.

### EXAMPLES

The present invention will now be described with the aid of some experimental tests the results whereof are shown in the following Table 3 for illustrative purposes only and, therefore, not limiting of the scope of the present invention.

| **Table 3** | | | | |
|---|---|---|---|---|
| | Feed without additive | | Feed with additive | |
| | Chickens | Pigs | Chickens | Pigs |
| Final weight | 2.9500 kg | 26.200 kg | 3.100 kg | 30.200 kg |
| Feed Conversion Ratio (FCR) | 2.08 | 1.67 | 1.80 | 1.48 |
| Mortality | 6.00 % | 3.00% | 2.98 % | 1.00% |

The invention thus conceived is susceptible to numerous modifications and variations, all of which are within the scope of the inventive concept. The invention is as defined in the appended claims.

## Claims

1. A food additive for farm animal or pet feeds comprising a composition of a mixture of food acids and a mixture of essential oils, **characterized in that** the mixture of food acids is present in a percentage by weight equal to 94.45% with respect to the total weight of the composition and wherein the mixture of food acids consists of: 89.45% acetic acid; and 5% citric acid; wherein the percentages are percentages by weight with respect to the total weight of the composition.

2. The food additive according to claim 1, wherein the mixture of essential oils comprises a measured amount of eucalyptol, a measured amount of oregano essential oil and a measured amount of thymol.

3. The food additive according to claim 2, wherein the mixture of essential oils comprises a measured amount of garlic essential oil.

4. The food additive according to claim 1, wherein the mixture of essential oils is present in a percentage equal to 5.55% with respect to the total composition.

5. The food additive according to claim 3, wherein the mixture of essential oils consists of:
- 3% eucalyptol;
- 2% oregano essential oil;
- 0.5% thymol;
- 0.05% garlic essential oil;
wherein the percentages are percentages by weight with respect to the total weight of the composition.

6. Use of a food additive according to claim 1 for the preparation of an animal feed.

## Patentansprüche

1. Nahrungsmittelzusatz für Nutztier- oder Haustierfutter, umfassend eine Zusammensetzung aus einem Gemisch von Nahrungsmittelsäuren und einem Gemisch von ätherischen Ölen, **dadurch gekennzeichnet, dass** das Gemisch von Nahrungsmittelsäuren in einem Gewichtsprozentsatz von 94,45 %, bezogen auf das Gesamtgewicht der Zusammensetzung, vorhanden ist und wobei das Gemisch von Nahrungsmittelsäuren aus Folgendem besteht: 89,45 % Essigsäure; und 5 % Zitronensäure; wobei die Prozentangaben Gewichtsprozente bezogen auf das Gesamtgewicht der Zusammensetzung sind.

2. Nahrungsmittelzusatz nach Anspruch 1, wobei das Gemisch ätherischer Öle eine abgemessene Menge an Eukalyptol, eine abgemessene Menge an ätherischem Oreganoöl und eine abgemessene Menge an Thymol umfasst.

3. Nahrungsmittelzusatz nach Anspruch 2, wobei das Gemisch aus ätherischen Ölen eine abgemessene Menge an ätherischem Knoblauchöl umfasst.

4. Nahrungsmittelzusatz nach Anspruch 1, wobei das Gemisch aus ätherischen Ölen in einem Prozentsatz von 5,55 %, bezogen auf die Gesamtzusammensetzung, vorhanden ist.

5. Nahrungsmittelzusatz nach Anspruch 3, wobei das Gemisch aus ätherischen Ölen aus Folgendem besteht:
- 3 % Eukalyptol,
- 2 % ätherischem Oreganoöl;
- 0,5 % Thymol;
- 0,05 % ätherischem Knoblauchöl;
wobei die Prozentsätze Gewichtsprozente bezogen auf das Gesamtgewicht der Zusammensetzung sind.

6. Verwendung eines Nahrungsmittelzusatzes nach Anspruch 1 für die Herstellung eines Tierfutters.

## Revendications

1. Additif alimentaire pour animaux d'élevage ou de compagnie comprenant une composition d'un mélange d'acides alimentaires et d'un mélange d'huiles essentielles, **caractérisé en ce que** le mélange d'acides alimentaires est présent dans un pourcentage en poids égal à 94,45% par rapport au poids total de la composition et dans lequel le mélange d'acides alimentaires est composé de : 89,45 % d'acide acétique ; et 5 % d'acide citrique ; les pourcentages étant des pourcentages en poids par rapport au poids total de la composition.

2. Additif alimentaire selon la revendication 1, dans lequel le mélange d'huiles essentielles comprend une quantité mesurée d'eucalyptol, une quantité mesurée d'huile essentielle d'origan et une quantité mesurée de thymol.

3. Additif alimentaire selon la revendication 2, dans lequel le mélange d'huiles essentielles comprend une quantité mesurée d'huile essentielle d'ail.

4. Additif alimentaire selon la revendication 1, dans lequel le mélange d'huiles essentielles est présent dans un pourcentage égal à 5,55% par rapport à la composition totale.

5. Additif alimentaire selon la revendication 3, dans lequel le mélange d'huiles essentielles comprend :
- 3% d'eucalyptol ;
- 2% d'huile essentielle d'origan ;
- 0.5% de thymol ;
- 0,05% d'huile essentielle d'ail ;
Dans lequel les pourcentages étant des pourcentages en poids par rapport au poids total de la composition.

6. Utilisation d'un additif alimentaire selon la revendication 1 pour la préparation d'un aliment pour animaux.
